# EUROPEAN PATENT SPECIFICATION

(11) **EP 1 133 386 B1**
(45) Date of publication and mention of the grant of the patent: **01.06.2005**
(21) Application number: 98956244.2
(22) Date of filing: 28.10.1998
(51) Int. Cl.: B29C 45/14

(54) **MULTILAYER ROLLS HAVING A THIN FLUOROPOLYMER TOP COAT AND METHOD OF MANUFACTURE**
MEHRSCHICHTROLLEN MIT DÜNNER FLUORPOLYMERDECKBESCHICHTUNG UND VERFAHREN ZUR HERSTELLUNG
ROULEAUX MULTICOUCHES REVETUS D'UNE FINE COUCHE SUPERIEURE DE POLYMERE FLUORE ET LEUR PROCEDE DE FABRICATION

(30) Priority: 28.10.1997 US 959397
(43) Date of publication of application: 19.09.2001
(73) Proprietor: AMES RUBBER CORPORATION, Hamburg New Jersey 07419 (US)
(72) Inventor: DELROSARIO, Chris, F., Demarest, NJ 07627 (US); LUKE, Melvin, F., Butler, NJ 07405 (US); MARVIL, Timothy, D., Sussex, NJ 07461 (US)
(74) Representative: Bannerman, David Gardner
(86) International application number: PCT/US1998/022752
(87) International publication number: WO 2000/024561

(56) References cited:
- US-A- 3 613 168
- US-A- 3 724 983
- US-A- 4 113 825

## Description

This invention relates to a method for forming a multilayer roll having a fluoropolymer top layer on an elastic layer which is bonded to a substantially rigid core to an apparatus for fabricating a multi-layer roll with a fluoropolymer top layer formed from a fluoropolymer membrane on an elastomeric base layer bonded to a substantially rigid cylindrical core and to an apparatus for carrying out the method. The method of preparation of the roll is particularly well suited for use in xerographic and electrophotographic copying machines and printers.

There are a wide variety of rolls used in xerographic copiers and electro graphic printing devices. Typically, these are fabricated with a solid core or insert and have an intermediate elastomeric base layer covered by a smooth top coat, such as a fluoropolymer top coat. The top coat provides an outer surface area of low surface tension. In operations such as fusing, which are generally carried out at elevated temperatures, the low surface tension prevents toner from adhering to the roll surface, or reduced image quality and offset when toner attaches to the roll surface.

Among the various types of rolls utilized in these devices, include fuser, pressure and donor rolls, film forming and drying rolls in wet or liquid toner systems, corona rolls, squeegee rolls, photoconductor rolls, low friction rolls and printing rolls. Thus, there is a large need for rolls where the properties of the top coat can be varied to serve these various end uses. This includes rolls having improved release properties, extended useful life and protect the intermediate elastomeric base layer which is bonded to the roll insert. These needs arise particularly in the case of higher speed applications.

In order to retain the advantages of the elastomeric base coat such as good compliance and efficient heat transfer, it is desirable to provide as thin a fluoropolymer top coat as possible. There are several ways in which a fluoropolymer covered roll with an elastic base layer can be fabricated.

Several of these are well known and used for producing rolls used in the electro photographic industry.

The most common way to prepare a roll having a fluoropolymer top coat on an elastomeric base layer is to heat shrink a pre-expanded fluoropolymer tube over a cured elastomer. A more elaborate method uses a "mold in place" technique. Here, an insert is centered in a fluoropolymer tube and elastomeric material is injected between the insert and the outer fluoropolymer tube. In this method, the fluoropolymer tube is generally flexible, yet self-supporting and is typically between about 254 to 635 microns (15 and 25 mils) in thickness. In U.S. Patent No. 3,613,168 to Rowland and Tabelle a flexible yet self-supporting relatively thick fluoropolymer tube is placed inside a groove in an end piece of a casing which is mounted on a spindle of an extruder to maintain the core and fluoropolymer sleeve concentrically. Silicone rubber is then extruded into the space between the mounted tube and core, which has been mounted on the spindle so that the elastomer material bonds to the core and fluoropolymer sleeve after curing.

U.S. Patent No. 3,724,983 to Nelson discloses a mold similar to that utilized in Rowland and Tabelle. Here, silicone rubber is extruded through a series of ports spaced about a cylindrical core into the space between the core and a flexible sleeve. U.S. Patent No. 4,113,825 to Hill, Onnen and Ryder discloses a further embodiment including a plurality of small diameter cylindrical passages for injecting siliconce rubber into the interior of the mold between the sleeve and rigid core.

Other methods of manufacture include stretching a fluoropolymer sleeve below its yield point and while at this stage, inserting an elastomeric covered roll into the stretched sleeve. Releasing the pressure on the sleeve allows the fluoropolymer sleeve to shrink back and come into complete contact with the roll. In this case, the diameter of the elastomeric roll is larger than the unstretched fluoropolymer sleeve. When a vacuum is used in this process, it provides the added advantage of an air free fluoropolymer/elastomer interface. Alternatively, a fluoropolymer powder or latex can be sprayed or coated onto an elastomeric base layer.

In European Patent Application EP-A-0 625 735 to Japan Gore-Tex rolls are provided with a release surface of porous polytetrafluoroethylene top coat in which the pores are impregnated with a cross-linked synthetic rubber over an elastic porous body material of synthetic rubber foam. Here, the thickness of the PTFE release surface can be as low as three microns. The roll is fabricated by applying a non-continuous adhesive layer on the outer surface of the porous silicone rubber base coat and wrapping a porous expanded PTFE film of about 20 microns thick with a pore size of about two microns, one turn about the silicone rubber foam to form a single layer with a slight edge overlap. The entire assembly is then heated to fuse the adhesives and adhere the pores expanded PTFE film to the silicone rubber.

Thin films of porous PTFE impregnated with uncured silicone rubber for forming release top coats having thicknesses as low as three microns are also described in European Patent No. EP 441 114 to Fuji Xerox Co., Ltd. and Japan Gore-Tex, Inc. Here, unbaked polytetrafluoralethylene is expanded forming a fibrillated polytetrafluoralethylene film with voids ranging from 30 to 98 percent and pores from 0.02 microns to 15 microns is soaked with one or more types of silicone rubber to fill the voids. The film is wrapped around the surface of the roll having an elastic body layer and thereafter hardened by heating.

While these rolls and methods of fabrication described in the prior art are generally suitable for producing rolls with PTFE top coats, it remains desirable to provide an improved roll having an expanded PTFE top coat and an improved method of fabricating such rolls.

Accordingly, the object of the invention is to provide a method for preparing a roll having a thin fluoropolymer top layer from a PTFE expanded sheet or tube having a thickness from about 5 to 50 microns (0.2 to 2.0 mil) on an elastomeric base layer bonded to an insert and an apparatus for use in preparing the roll.

This object is achieved according to the invention by the method as defined in claim 1, by the apparatus as defined in claim 5 and by the apparatus as defined in claim 8.

Particular embodiments of the invention are the subject of the dependent claims.

Generally speaking, in accordance with the invention, a method for forming a multi-layer roll having a fluoropolymer top layer is formed by disposing a thin porous fluoropolymer membrane in sheet or sleeve form over an elastomeric base layer bonded to a substantially rigid insert is provided. The fluoropolymer membrane is formed from an extruded film or a sheet which is stretched in both machine and traverse directions, taken to its melting point and at least partially sintered. When the fluoropolymer membrane is in th form of a sheet or film, it is wrapped in layers directly over a insert which has been positioned in end spiders with the film wrapped about the insert and extending past the end of the insert to cover the spiders. The top coat and insert assembly is placed into a concentric thin walled molding sleeve which is then placed into the cavity of a book mold. Liquid or flowable solid uncured elastomer material is injected through a spider mounted at the end of the insert into the space between the insert and top coat membrane causing the membrane to expand and fill a tubular mold cavity. Upon application of heat and pressure, the elastomeric material is cured. The wrapped fluoropolymer layers are compressed creating a continuous covering with no evident seam line. Depending on the intended application of the roll, the top fluoropolymer layer can be sintered to a desired degree or remain non-sintered.

In an alternative embodiment, a thin flexible non-self supporting extruded tube of fluoropolymer is utilized in place of the wrapped membrane. Here, the thin non-self supporting tube is fed over the insert and end spiders extending beyond the length of the insert and spiders. The assembled insert and top coat is placed into a tube of a book mold and the uncured elastomeric material is injected between the insert and thin fluoropolymer sleeve expanding and sizing the sleeve to the internal diameter of the tube. The elastomeric material is cured, bonding to the insert and the top coat to the cured elastomer.

The method of fabrication of the roll includes the step of placing the membrane or sleeve over the insert and extending the top coat over the end spiders. This allows injection of resin between the insert and top layer without tearing or wrinkling when injecting the elastomer as the top layer is a non-self supporting sheet or tube. This permits fabrication of rolls having a fluoropolymer top layer as thin as three microns.

### BRIEF DESCRIPTION OF THE DRAWINGS

For a fuller understanding of the invention, reference is had to the following description taken in connection with the accompanying drawing(s), in which:
FIG. 1 is a perspective view of a mold utilized in the manufacture of the multi-layer roll in accordance with the invention;
FIG. 2 is a partial cut away perspective view of a multi-layer roll fabricated using the book mold of FIG. 1 in accordance with the invention;
FIG. 3 is an exploded view of the book mold of FIG. 1 and roll components and spider assemblies utilized in preparation of the roll of FIG. 2 from an extended sleeve of the fluoroelastomer;
FIG. 4 is a perspective view showing a thin fluoroelastomer film on a storage roll as it is being wrapped around a core and spider assembly in accordance with an embodiment of the invention;
FIG. 5 is a cross-sectional view showing the inlet spider before injecting elastomeric material into the mold taken along line 5-5 of FIG. 1;
FIG. 6 is a view identical to FIG. 5 showing the portion of the mold after the elastomeric resin has been injected into the spider assembly of FIG.5;
FIG. 7 is a cross-sectional view of the completed roll showing the multi-layer structure;
FIG. 8 is a schematic-sectional view of a fixing unit of a reprographic machine equipped with an elastic fixing roll constructed and arranged in accordance with the invention;
FIG. 9 is a plan view of a multi-cavity book mold in accordance with another embodiment of the invention with a ball bleed device show prior to injecting resin into the mold in accordance with yet another further embodiment of the invention; and
FIG. 10 is a schematic drawing of a sintering device for sintering a roll fabricated in accordance with a further embodiment of the invention.

### DESCRIPTION OF THE PREFERRED EMBODIMENTSS

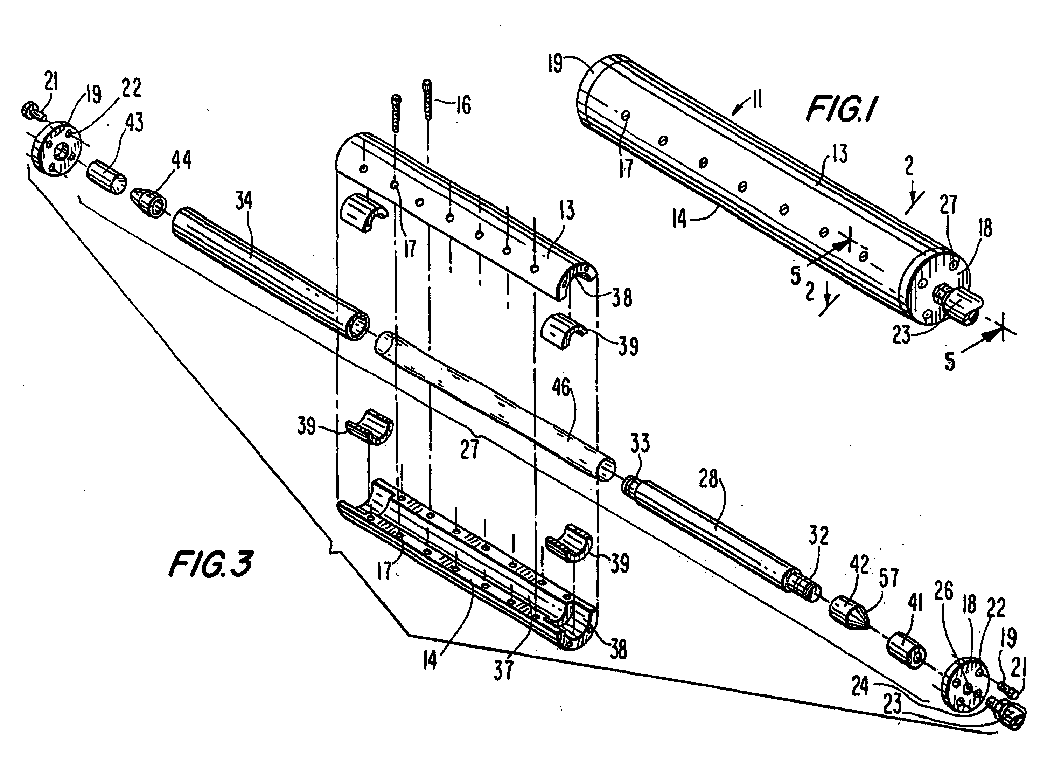

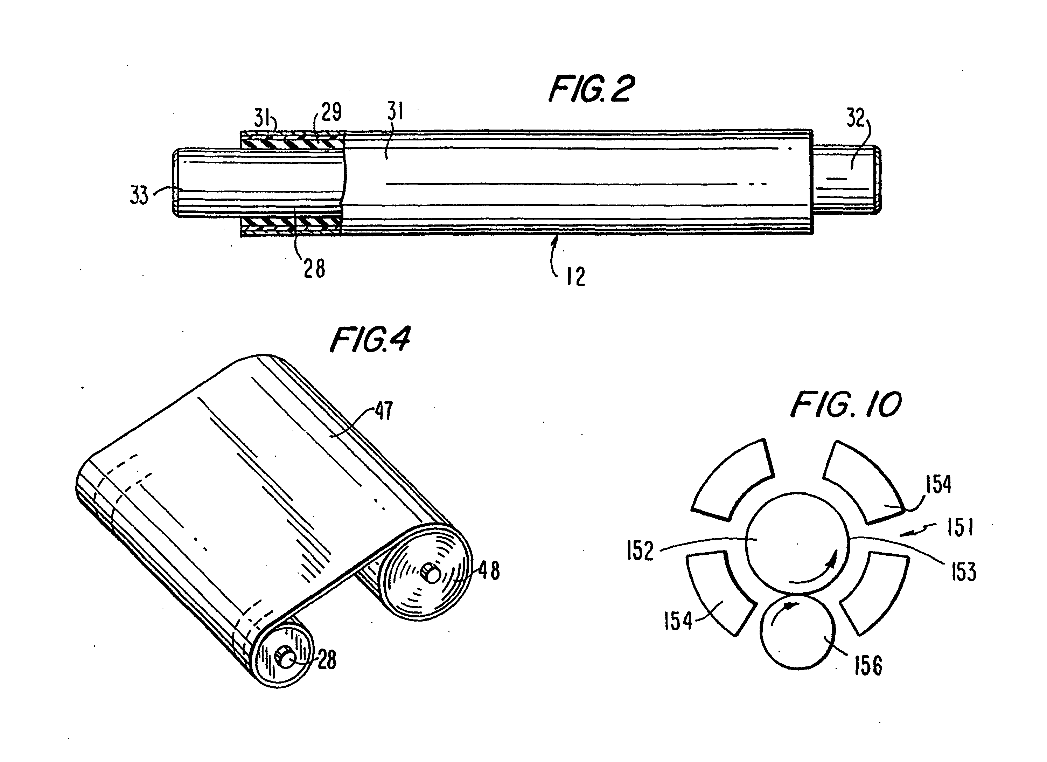

FIGS.1 and 2 show an assembled book mold 11 for the in place molding of a multi-layer roll 12 in accordance with the invention shown in a partial cutaway perspective view in FIG. 2. Book mold 11 includes an upper mold section 13 and a mating lower mold section 14 coupled together by a plurality of bolts 16 placed in cooperating holes 17 formed in upper mold section 13 and lower mold section 14. The ends of mold 11 include an inlet face plate 18 and an outlet face plate 19 bolted to the ends of upper and lower mold sections 13 and 14 by a plurality of bolts 21 in cooperating holes 22 in face plates 18 and 19. A hollow spindle 23 having a threaded nipple 24 is coupled to a source of liquid or flowable uncured elastomerfic material (not shown). Nipple 24 is threaded into a central opening 26 in inlet face plate 18 for injecting the elastomeric resin into mold 11.

Roll 11 illustrated in FIG. 2 includes a solid core 28 and an elastomeric base layer 29. A thin flexible top layer of fluoroelastic polymer 31 is disposed over and completely encloses elastomeric base layer 29. Core 28 is a : solid metal core, but may be hollow depending on the applicattion of the finished roll. Roll 12 as shown includes a solid metal core (28) and is formed with a large journal 32 at the inlet end of core 28 and a small journal 33 at the opposed outlet end. of core 28. Journals 32 and 33 may be the same or different sizes depending on the use of the finished rolls. Top layer 31 is applied in the form of a thin flexible sleeve as described in connection with FIG. 3, or a wrapped film as described in connection with FIG. 4.

Referring now to FIG. 3, book mold 11 and top layer sleeve 46 are shown in an exploded perspective view. This illustrates the individual components of mold 11 and roll 12 assembled during fabrication. Upper mold portion 13 includes an interior cylindrical cavity half 36 and lower mold portion 14 includes a cooperating cylindrical cavity half 37. Mold portions 13 and 14 are assembled to form a hollow cylindrical book mold for receiving a cylindrical sleeve mold 34 with core 288 positioned therein. Each mold portion 13 and 14 is formed with a cooperating end seat 38 for forming a cylindrical opening larger in diameter than sleeve mold 34. A cylindrical spider collar 39 is mounted in each end seat 38 in upper mold portion 13 and lower mold portion 14. Each pair of cylindrical spider collar halves 39 receives a female spider extender 41 with a male spider 42 positioned therein for injecting the elastomeric material about core 28. Positioning female spider extenders 41 and 43 between spider collar halves: 39 aids in centering core 28 within the cylindrical cavity in sleeve mold 34. This also retains flexible sleeve 46 of top layer material between the outer cylindrical surface of female spider extenders 41 and 43 and spider seats 38.

Male inlet spider 42 having a cylindrical base 40 and a conical portion 52 is inserted into female spider extender 41 which is positioned on large journal 32. At the opposite outlet end of core 28 outlet female spider extender 43 receives an outlet male spider 44 which is mounted on small journal 33. During preparation of roll 12 for loading into mold 11, male inlet spider 42 is positioned over large inlet journal 32, and female inlet spider extender 41 is placed over male inlet spider 42. Similarly, male outlet spider 44 is placed on small outlet journal 33 and placed within female outlet spider extender 43. Thin flexible top layer sleeve 46 is then placed over core 28 and the assembled spiders (i.e. male spiders and female spider extenders) mounted on core 28.

Flexible sleeve 46 is formed in a desired thickness and is dimensioned to have a diameter larger than core 28 and a length sufficient to extend over the full length of an assembly 27 of core 28, male spiders 42 and 44 and female spider extenders 41 and 43 and beyond the ends thereof. Sleeve mold 34 is dimensioned to fit into the cylindrical cavity of book mold 11 up against the edge of cylindrical spider collar half 39 and receive core 28 and cylindrical portions 40 of male spiders 42 and 44. When sleeve mold 34 is placed over assembled sleeve 46 and core 28 and positioned in cylindrical groove half 37 in lower mold portion 14, female inlet spider extender 41 and female outlet spider extender 43 are resting on spider collars 39 which have been positioned in seats 38 at both ends of lower mold portion 14. This insures that each of the cylindrical elements, including metal core 28, male spiders 42 and 44, flexible sleeve 46 and sleeve mold 34 are all coaxial with the axis of core 28.

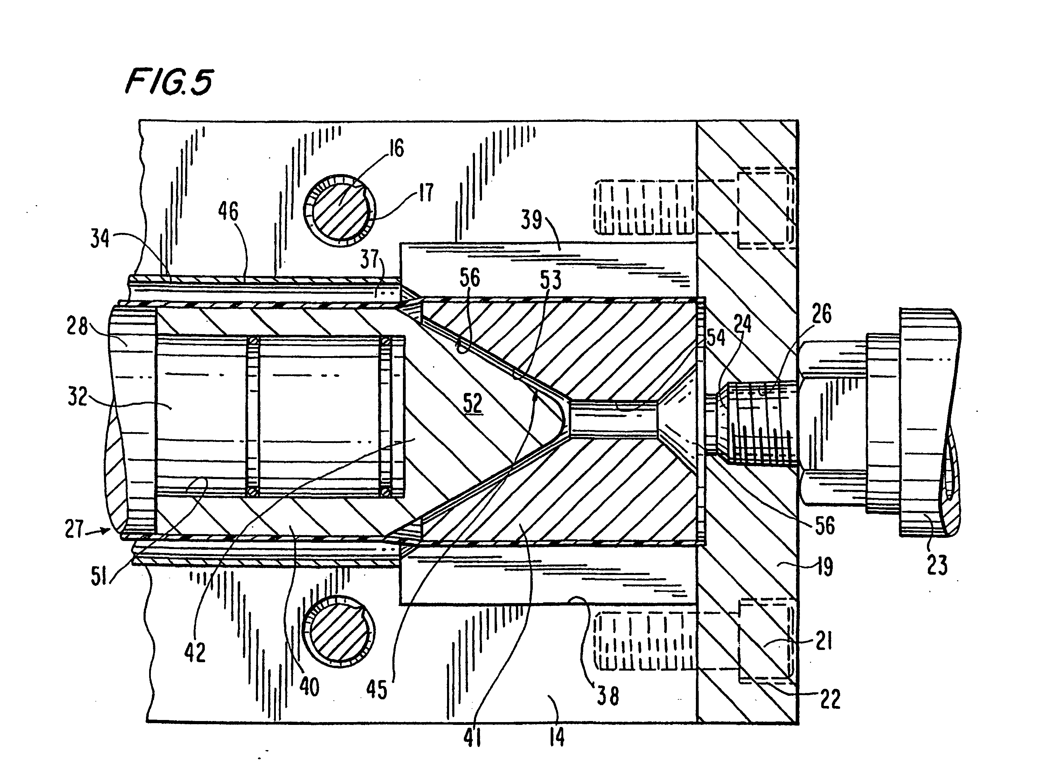

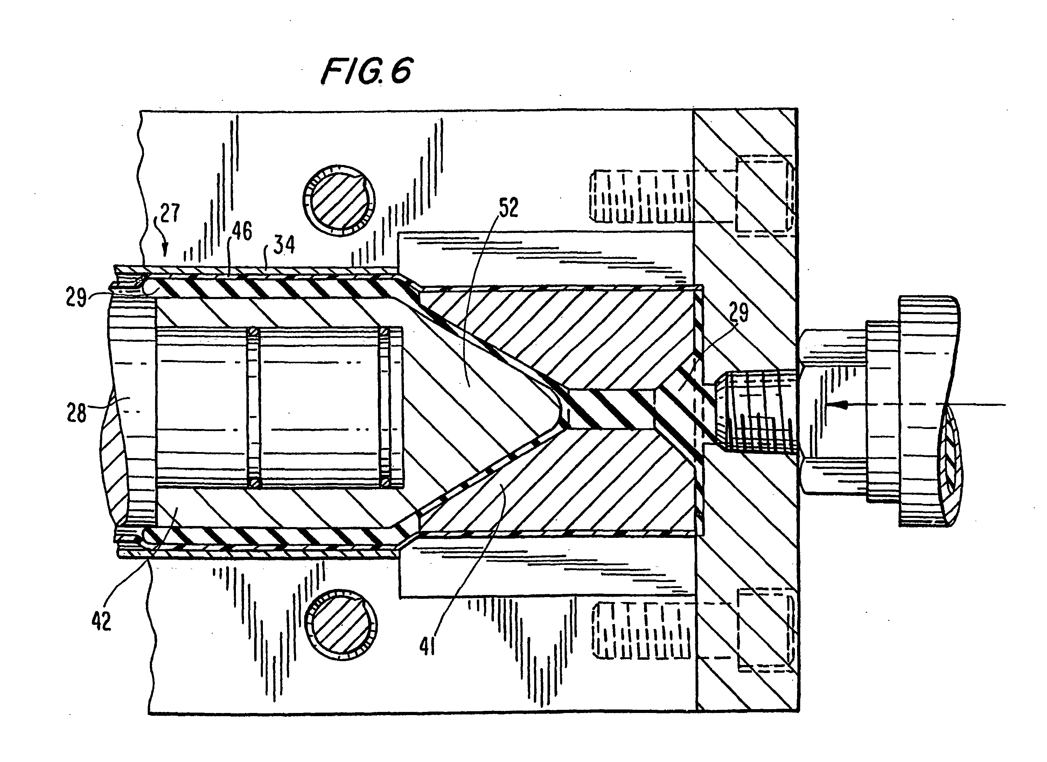

Flexible elastomeric sleeve 46 is sufficiently long and extends beyond the ends of the respective spiders at each end of core 28. By doing so, this insures that the uncured elastomeric material which is to be forced into the space between sleeve 46 and the outer surface of core 28 will not wrinkle or tear sleeve 46 when the elastomeric material is injected as will be described in connection with FIGS. 5 and 6.

Turning first to FIG. 4, a supply of an expanded polytetrafluoralethylene membrane 47 wound on a supply roll 48 is shown. PTFE membrane 47 is formed from a PTFE : resin which is first mixed with a lubricant then compressed into a pre-form and cold extruded through a sheet die to form a continuous sheet. The continuous sheet is stretched in both the machine and transverse direction and heated to its crystalline melting point. It is then sintered and wound onto supply roll 48. Membrane 47 utilized in accordance with the invention, vary in pore size which can range from 0.05 to over 3.0 microns.

During fabrication of roll 12 in accordance with the invention, PTFE membrane 47 is wrapped in layers directly over assembly 27 of core 28 and sleeve mold 34 with male spiders 42 and 44 mounted on journals 32 and 33, respectively is then inserted into mold 11 for fabrication and curing. After membrane 47 has been wound about core and spider assembly 27 the elements are treated in the same fashion as fabrication utilizing sleeve 46. Thus, reference to the following FIGS. 4 and 5 showing injection of elastomeric material is identical regardless of the manner in which the fluoropolymer layer is placed about the assembled core and spider elements. After application of heat and pressure the elastomeric material inside the fluoropolymer top layer material is cured. The wrapped layers of PTFE membrane 47 create a continuous covering with no evidence of seam lines.. Utilizing membrane 47 allows fabricating a fluorocarbon top layer, such as Teflon, with thicknesses from less than 10 microns (0.2 mils) to over 50 microns (2 mils). The surface porosity of membrane 47 can be further controlled by sintering and pressuring finished roll 12 after it is removed from the sleeve mold.

FIGS. 5 and 6 illustrate in cross-section the large inlet journal end and inlet spider elements of book mold 11. The reference numerals are identical to those utilixed in connection with the description of the exploded respective view of FIG. 3. Here, male inlet spider 42 is positioned on large journal 32 at the inlet side of core 28. Female inlet spider extender 41 is positioned over tapered end 52 of male inlet spider 42 and seated within collar 39 mounted in cylindrical end seat 38 of bottom mold portion 14. Flexible sleeve 46 positioned about the assembled spider elements at inlet end of core 28 extends to the inlet side of female inlet spider extender 41. The inlet end of flexible sleeve 46 is tightly held between the cylindrical outer wall of female inlet spider extender 41 and collar 39. This ensures that flexible sleeve 46 will not be wrinkled when elastic material is injected into the space between sleeve 46 and core 28. Similarly, at the outlet end, the end of flexible sleeve 46 is held between the outer wall of female outlet spider extender 43 and collar 39.

Large inlet journal 32 and small outlet journal 33 are constructed essentially the same. Male inlet spider 42 is somewhat longer and includes a longer cylindrical opening 51 for receiving longer inlet journal 32. The inlet end of male inlet spider 42 includes a tapered surface (52) for mating with an interior tapered opening 53 in female inlet spider extender 41. Female inlet spider extender 41 includes a central bore 54 coupled to a funnel inlet 56 which cooperates with nipple 24 of spindle 23 for injecting elastomer material.

In order to provide a passageway for elastomeric material to flow through female spider extender 41 to the space between core 28 and sleeve mold 34, conical end 45 of male spider 42 is formed with a plurality of grooves 57 formed on the outer surface of conical end 52 as shown in FIG.3. At least three or four grooves should be provided, but as many as six or eight may be provided in order to ensure that elastomeric material flows evenly about the entire surface of core 28 causing fluoropolymer top layer sleeve 34 to expand and engage the interior surface of sleeve mold 34.

After fluoropolymer top layer sleeve 46 is placed over spider and core assembly 27 it is inserted into sleeve mold 34 and positioned in bottom mold portion 14, cooperating top mold portion 13 is mounted thereby fully engaging flexible sleeve 46 within spider collar halves 39. Mold 11 is then secured by bolts 16, end plates 18 and 19 are positioned and secured by bolts 21. At this time, nipple 24 is threaded into opening 26 in inlet plate 19. When the assembled sleeve mold 34 is positioned and mold portions 13 and 14 are secured, elastomeric material is then injected into female inlet spider extender 41.

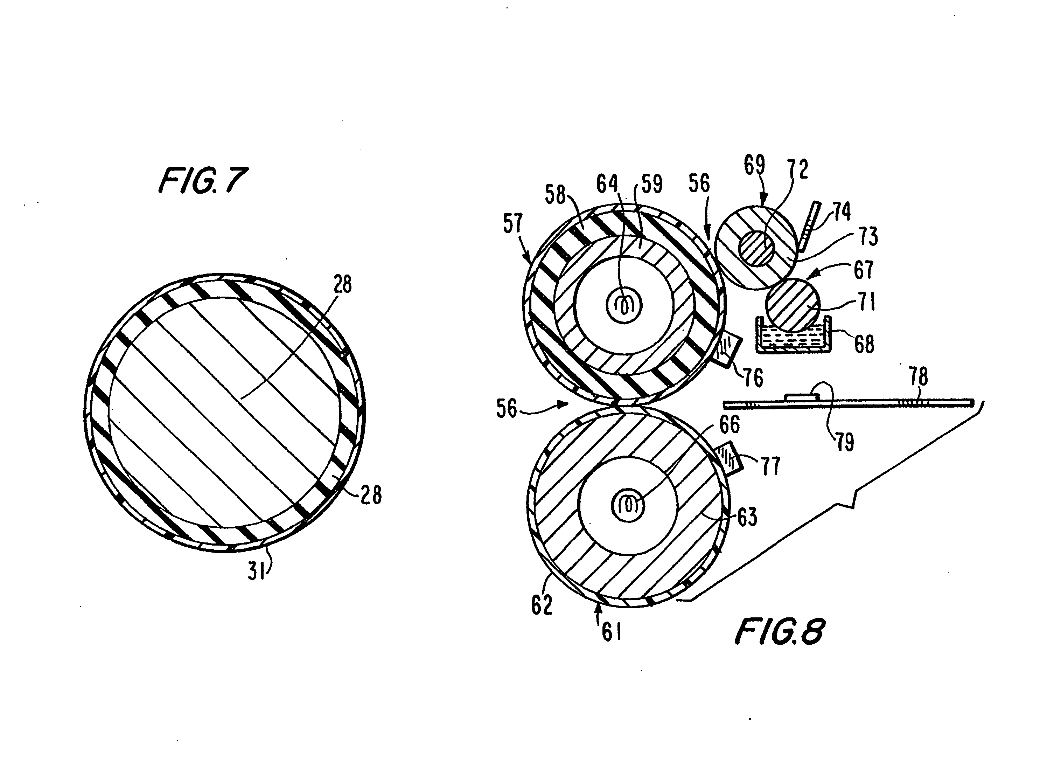

FIG. 6 shows the identical elements as in FIG. 5; however, elastomeric material 29 can be seen filling the space between flexible sleeve 46 and male inlet spider 42 just as elastomeric material 29 begins to reach the outer surface of core 28. Because the inlet end of sleeve 46 is firmly engaged between the outer surface of female inlet spider extender 41 and the inner cylindrical surface of inlet spider collar halves 39, sleeve 46 retains its smooth profile without being pulled or wrinkled. Elastomeric material 29 is injected until the entire cavity is filled and material is extruded through female outlet spider extender 43 in order to produce roll 11 as shown in FIG.2 and in cross-section in FIG.7.

Elastomeric material 29 forming the compliant base layer may be a liquid silicone rubber or flowable material in liquid form. The viscosity of these materials can vary from a low of 1.0 x 10⁴ to as high as 2.5 x 10⁵ CPS. Elastomeric material 29 is not limited to silicone materials or liquid elastorners . It is possible to utilize mold 11 and prepare multi-layered rolls in accordance with the invention using liquid urethane or other liquid elastomeric materials such as epoxy, polyesters, nitriles and the like.

Once the void about core 28 is filled, closed book mold 11 is heated to cure elastomeric material 29. Cure temperature for a silicone material is typically from about 135° to 204°C (275° to 400°F). The actual cycle time is a function of size, material and configuration.

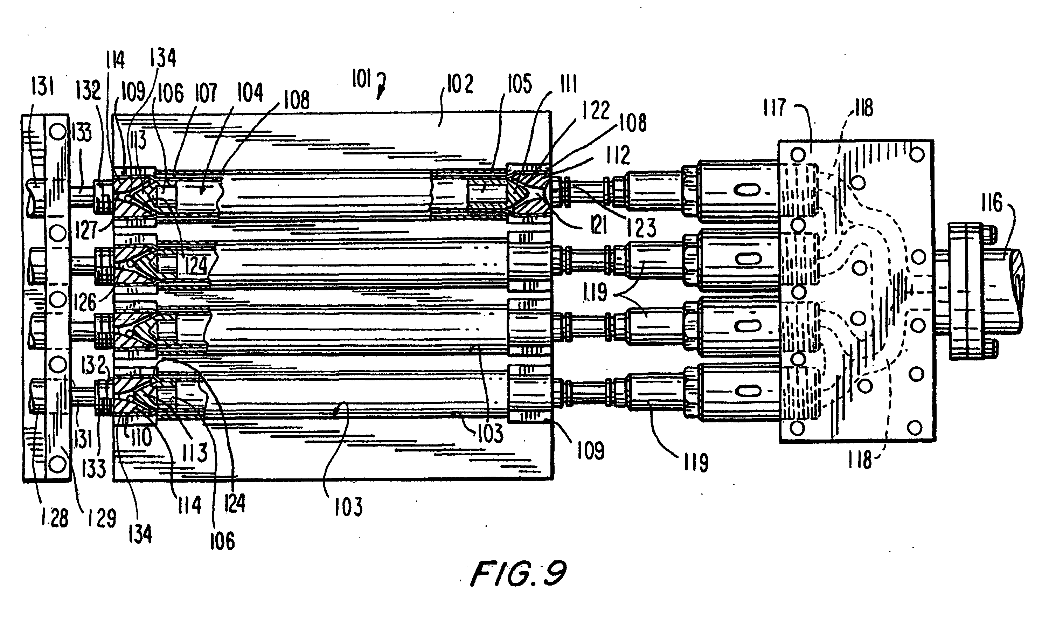

The embodiment of book mold 11 for fabricating roll 12 in accordance with the invention described in connection with FIGS. 1-7 is directed to the use of a single cavity mold. In commercial and higher output applications, a multi-cavity mold 101 as illustrated in FIG. 9 would be used. FIG. 9 illustrates in plan view a lower multi-cavity mold block 102 having four lower cavities 103. A metal core insert 104 with an inlet journal 105 and an outlet journal 106 and a PTFE sleeve 107 thereabout within a sleeve mold 108 is shown seated in each cavity 103 in the same manner as the cavity formed in book mold 11.

Each cavity 103 in lower mold block 102 has an inlet spider collar 109a and an outlet spider collar 109 fixedly mounted at the inlet and outlet to lower mold block 102, respectively for centering all cylindrical elements. An inlet male spider 111 is mounted on inlet journal 105 at the inlet end of insert 104 set within inlet female spider extender 112 which rests within the recess in spider collar 108. Similarly, an outlet male spider 113 is placed on outlet journal 106 of insert 104 and rests within an outlet female spider extender 114 which is seated within recess in outlet spider collar 109. When assembled in this manner, PTFE sleeve 107 extends beyond both ends of mold sleeve 108, with the ends retained and held securely by the tight fit between the outer cylindrical surface of female spider extenders 112 and 114 and spider collar 109 and 110 in the same manner as the single cavity mold described above. This allows use of an extremely thin and non-self supporting PFTE sleeve which will form outer non-stick top layer 31 of the completed roll 12.

Elastomer for forming the base coat is feed from the extruder (not shown) through a mold inlet 116 to a main feed block 117 which includes a plurality of inlet channels 118 (shown in phantom) leading to the same number of pneumatic actuated cylinder nozzles 119. One nozzle 119 is provided for each cavity 103 at inlet female spider extender 112 which has an inlet channel 121 and an outlet cavity 122 for receivingmale inlet spider 111. Female inlet spider extender 112 is formed with a spherical opening 123 on the inlet side to act as a bushing for receiving the sprue end of nozzle 119.

The outlet end of mold 101 includes male spider 113 mounted on an outlet journal 106 of insert 104 and is disposed within a cavity 124 of female spider extender 114 which is positioned in spider collar 109. Each outlet female spider extender 114 includes a bleed cavity 126 with a bleed outlet 127 which is engaged by a bleed hydraulic cylinder 128. Cylinders 128 are mounted on a cylinder block 129 and include a cylinder rod 131 with a bleed cylinder rod end 132 with bleed slots 133 which engage bleed outlet 127 of female spider extender 114. Each cylinder rod end 132 includes a bleed slot 133 permitting escape of air therethrough. Each bleed cavity 126 in female spider extender 114 has a ball bleed element 134 seated therein. Elemmant 134 is displaceable within cavity 126 and acts as a seal when the cavity fills with elastomer by closing bleed outlet 127. For example, when bleed outlet 127 is 0.476 cm (3/16 inch) in diameter, ball bleed element 134 is 0.635 cm (0.25 inch) in diameter. Thus, when positioned of bleed outlet 127, ball element 134 will close the particular cavity.

During operation, as elastomer is fed into mold 101 from the extruder, air present in cavities 103 is expelled through bleed slots 133 in cylinder rod ends 132. As elastomer progresses along the outside surface of one insert 104, air continues to be expelled through bleed slots 133 and elastomer reaches bleed ball element 134 in female spider extender 114. At this time, bleed ball element 134 is forced to the outlet side of bleed cavity 126. This effectively closes bleed outlet 127 of female spider extender 114 and prevents additional elastomer from entering a particular cavity. This insures that elastomer is evenly distributed into each cavity about the surface of insert 104 and stretches PTFE sleeves 107 thereabout and causes each remaining cavity 103 to fill and be sealed in the same manner. The same type of bleed element to close single cavity mold of the type illustrated FIGS. 1-7 can also be used.

Mold block 102 is mounted on a heated platen (not shown) so that mold sleeves 108 can be heated and cured. Elastomer 116 cures within about 2 to 10 minutes and mold 101 is then released from nozzles 119 and opened to retrieve the completed rolls.

Once elastomer 116 cures, the sleeve mold part assemblies with insert and siders are cooled, for example, by quenching in cold water, and opened to remove the rolls with sleeves 108. The multi-layer inserts 104 are removed, excess top layer and elastomer are trimmed from the ends about journals 105 and 106 to provide a completed multi-layer molded roll as roll 12 in FIG. 2. When a PFA sleeve is used, the manufacturing process is completed. If a fibrillated Teflon membrane has been wound about insert 104, the molded roll is generally sintered to complete preparation. Alternatively, sintering can be accomplished prior to trimming the excess coatings about journals 105 and 106. The sintering steps are described in the examples in more detail below.

The following examples describe preparation of a multi-layer rolls having a fluoroelastomer top coat over a silicone base coat on a metal insert. These examples are presented for purposes of illustration only, and is not intended to be construed in a limiting sense.

### Examples 1-4

Using the method just outlined, the following rolls using the materials identified were prepared. When preparing each roll using a PTFE film, approximately seven wraps of the PTFE membrane are placed about a metal insert and spider assembly to provide a final top layer of about 12.5 microns (one-half mil) in thickness. The membrane is wrapped about the core and spider assembles prior to being placed into the sleeve mold. Elastomeric rubber is then inserted at a pressure of about 63,279 kg/m² (90 psi), but this could be increased several fold to 703,100 kg/m² (1000 psi). Cure time is approximately 10 to 15 minutes. The thickness of the base elastomertic coat can vary from 250 microns (10 mil) to 1.25 cm (1/2, inch). The final thickness will depend on the desired end use which is easily obtained by varying the relative dimension of the outer portion of the metal insert and the interior of the cavity of the sleeve mold.
(1) A fuser and pressure roll of a Tetratec porous membrane and DC590 (silicone) as the elastic material.
(2) A film forming-drying roll was formed of a Tetratec porous membrane as the topcoat and a liquid urethane as the elastomeric base coat.
(3) A highly conformable roll using a Tetratec porous membrane as the top coat and a foam silicone DC3-6548 as the elastomeric base material.
(4) A fusing role was formed of a Tetratec porous membrane as the top layer and DC 730 as the elastomeric base material. This roll was then vacuum soaked in a silicone solution allowed to cure at room temperature for 48 hours. The roll was then sanded smooth with the excess silicone removed exposing a Tetratec-silicone surface providing oleophillic surface properties. This surface is easily wetted by silicone oil for providing uniform coverage while maintaining good release, mechanical and comformability, desirable combined characteristic for a fuser roll.

### Example 5

As noted above, polytetrafluoralethylene membrane 47 may be sintered or maintained non-sintered. The degree of sintering can range from no additional sintering which provides a porous surface to a fully sintered film wherein 99 to 100 percent of the porosity has been eliminated by the process. The sintering process entails a combination of subjecting the molded roll to varying degrees of pressure and temperature for a selected period of time.

The following are varying sintering condition for the membrane described in connection with a fibrillated PTFE membrane as shown in FIG. 4.

| Example of Partially Sintered Roller: | |
|---|---|
| Rubber: | Silicone 50 Shore A |
| Toplayer: | 25 micron fibrillated PTFE |
| Load on roll: | 0.18 kg per linear cm (15 lbs per linear inch) |
| Temperature-preheat °C (°F) | 218-232 (425-450) |
| Sintering temperature: °C (°F) | 330-343 (625-650) |
| Time: | 120-240 secs. |

| Example of Fully Sintered Roller: | |
|---|---|
| Rubber: | Silicone 50 Shore A |
| Toplayer: | 25 micron fibrillated PTFE |
| Load on roll: | 0.18 kg per linear cm (15 lbs per linear inch) |
| Temperature-preheat °C (°F) | 218-232 (425-450) |
| Sintering temperature: °C (°F) | 343-413 (650-775) |
| Time: | 240-360 secs. |

In accordance with this aspect of the invention, a schematic of a sintering device 151 is illustrated. in FIG. 10. Here, a roll 152 having an outer surface of a membrane 153 which has been formed by injecting elastomeric material and curing is placed into sintering device 151.

Sintering device 151 includes a series of infrared lamps 154 disposed about the outer surface of roll 152 and includes a pressure roller 156 for applying the desired pressure. During the sintering process, roll 152 is rotated thereby providing pressure evenly about the outer surface of roll 152 as it is rotated to insure uniform heating and sintering of the outer surface 153.

Alternatively, sintering may utilize a heated drum or roll, rather than sintering lamps. In this case, infrared lamps 154 are not utilized and drum 156 is a heated drum, generally heated to temperatures of about 475 to 500°C (842 to 932°F). This will provide sufficient heat to sinter the top coat and adjust porosity as desired.

When forming multi-layer rolls in accordance with the invention using thin flexible sleeves, extruded perfluoroalkxy resin sleeves are used. These PFA sleeves are available in thicknesses raging from 50 to 250 microns (2 to 10 mils).

FIG. 8 is a schematic view illustrating use of a fixing unit 56 prepared in accordance with the invention in a reprographic machine including a hollow fixing roll 57 having an elastomeric base coat 58 on a hollow insert. A pressure roll 61 which rotates in contact with fixing roll 57 was prepared by coating a PTFE film 62 on the surface of a metal core 63. Both rolls 57 and 61 are hollow and provided with heat sources such as infrared lamps 64 and 66, respectively, on the inside thereof. An oil feeding unit 67 is utilized to prevent toner offset by providing oil from an oil pan 68 to an oil coating roll 69 via an oil pick up roll 71. Oil coating roll 69 has a metal core 72 coated with a silicone rubber coating 73 on the outside thereof. Oil coating roll 69 provides a constant amount of oil to fixing roll 57. Oil feeding unit 67 includes a blade member 74. Fixing unit 56 includes whipping devices 76 and 77 which clean rolls 57 and 61 at a copy medium 78 having an image 79 thereon is fed between fixing roll 57 and pressure roll 61.

Book mold 11 in FIG. 3 includes a single mold sleeve 46. This has been set forth for purposes of illustration only and not by way of limitation. During commercial production of rolls 12 book molds including a plurality of molding cavities 103 as shown in FIG. 9 for receiving a plurality of molding sleeves and corresponding seats are used. This will permit formation of several rolls from a single injection of elastomeric material and a single cure cycle of a book mold having multiple cavities for receiving a plurality of sleeve molds.

Accordingly, fabricating a multi-layer roll having a thin non-stick top layer on an elastomeric baselayer in accordance with the invention is a one step process. The multi-layer roll construction uses a fluoropolymer film in sheet form or sleeve form. This allows molding in place with an elastomeric material injected between the outer layer and a metal insert. By utilizing a concentric tube as the mold allows accurate positioning of the core and elastomeric and top layers as they are retained in the molding sleeve within a book mold enclosure. The method in accordance with the invention provides a one step process for molding in place. Because the thin top layer sleeve or membrane is held by a spider upstream of the point of elastomer injection, tearing or wwrinkling of the thin top layer film is avoided. A wide variety of sizes, thickness of base layer and top layer are also obtainable. There is a wide range of flexibility in controlling the film thickness as well as providing a low cost fabrication technique.

It will thus be seen that the objects set forth above, among those made apparent from the preceding description, are efficiently attained and, since certain changes may be made in carrying out the above method, and in the article set forth without departing from the spirit and scope of the invention, it is intended that all mater contained in the above description and shown in the accompanying drawings shall be interpreted as illustrative and not in a limiting sense.

It is also to be understood that the following claims are intended to cover all of the generic and specific features of the invention herein described and all statements of the scope of the invention which, as a matter of language, might be said to fall therebetween.

Particularly it is to be understood that in said claims, ingredients or compounds recited in the singular are intended to include compatible mixtures of such ingredients wherever the sense permits.

## Claims

1. A method for forming a multi-layer roll having a fluoropolymer top layer (31) on an elastic layer (29) which is bonded to a substantially rigid core (28), comprising:
providing a substantially rigid cylindrical core (28) and disposing a layer of flexible non-self-supporting fluoropolymer (31) around the cylindrical core (28) to form said top layer (31) in sheet or sleeve form over the full length of the core (28) to form an assembly;
placing said assembly into a cylindrical mold sleeve (34) having an inlet end and an outlet end together with a spider assembly (41, 42) at at least the inlet end of the core (28) for directing flowable elastomeric material (29) between the top layer (31) and the core (28), with the ends of the top layer (31) extending beyond the ends of the mold sleeve (34) and the spider assembly (41, 42);
placing the mold sleeve (34) with the core assembly into the cavity (36, 37) of a book mold (11) and closing the book mold (11) so that the top layer (31) that extends beyond the ends of the mold sleeve (34) and the spider assembly (41, 42) is engaged between the spider assembly (41, 42) and the book mold cavity (36, 37);
injecting flowable elastomeric material (29) between the top layer (31) and core (28) at a location downstream of the engagement of at least the inlet end of the top layer (31);
heating the book mold (11) to cure the elastomeric material (29);
cooling the molded insert; and
removing the multi-layer roll from the mold sleeve (34).

2. The method for forming a multi-layer roll of claim 1, wherein the top layer (31) is a flexible extruded fluoroelastomer film and the method includes wrapping the film about the core (28).

3. The method for forming a multi-layer roll of claim 1, wherein the top layer (31) is a flexible non-self supporting sleeve and the method includes disposing the sleeve about the core (28) and the spider assembly (41, 42) which extends beyond the mold sleeve (34) so that the flexible sleeve is engaged between the outside of the spider assembly (41, 42) and the book mold cavity.

4. The method for forming a multi-layer roll of claim 1, further including the step of sintering the top layer (31) by applying heat and pressure to the roll.

5. An apparatus for fabricating a multi-layer roll with a fluoropolymer top layer (31) formed from a fluoropolymer membrane on an elastomeric base layer (29) bonded to a substantially rigid cylindrical core (28) comprising:
a book mold (11) having a bottom section (14) and cooperating upper section (13) for forming a cylindrical cavity having an inlet end and an outlet end when the mold is closed;
a cylindrical mold sleeve (34) adapted to seat within the cylindrical cavity of the assembled mold;
a spider assembly (41, 42) for directing injected flowable elastomer material into the roll assembly between the core (28) and top layer (31) positioned on the inlet end of the mold sleeve (34);
the mold cavity including a region for engaging the top layer (31) between the spider assembly (41, 42) and the mold cavity when the sleeve is placed in the mold;
a source of elastomeric material for injection into the roll assembly; and
means for heating the mold to cure the elastomeric material.

6. The apparatus for fabricating a multi-layer roll of claim 5, wherein the spider assembly (41, 42) includes a male spider (42) adapted to be mounted on the end of the core (28) having a cylindrical portion and a tapered conical portion, the tapered portion including channels extending from the end of the conical portion to the cylindrical position, and a female spider extender (41) including a central opening for feeding elastomeric material to the conical portion of the male spider (42) and a tapered opening for receiving the conical portion of the male spider (42) and having an outer cylindrical wall engaging the membrane with the mold sleeve in place.

7. The apparatus for fabricating a multi-layer roll of claim 5, further including means for bleeding (127) excess elastomeric material at the mold outlet which includes a bleed element having a dimension greater than the channel adapted to be displaced in the channel when the mold is full to permit bleeding of elastomer to prevent additional elastomer to the mold cavity.

8. An apparatus for carrying out a method according to claim 1 for fabricating a plurality of multi-layer rolls with a fluoropolymer top layer (31) on an elastomeric base layer (29) bonded to a substantially rigid cylindrical core (28), comprising:
a plurality of cylindrical mold sleeves (34);
a book mold (11) having a bottom section (14) and cooperating upper section (13) for forming a plurality of cylindrical cavities for receiving the mold sleeves (34) when the mold is closed, each cavity adapted to receive and centre a roll insert disposed within the sleeves and securely engage the top layer (31) about the insert and extending beyond the ends of the mold sleeves (34);
the mold formed with an inlet (26) for injecting elastomeric material (29) into the roll assemblies;
means mounted on one end of the mold for injecting flowable elastomeric material into the roll assembly between the inner cylindrical core (28) and top layer (31) in a cylindrical mold sleeve (34) positioned in the cavity; and
means for heating the mold to cure the elastomeric material.

9. The apparatus for fabricating a multi-layer roll of claim 8, wherein the means for directing elastomeric material between the core and top layer is a substantially cylindrical spider assembly (41, 42) having channels for distributing the elastomeric material about the core.

10. The apparatus for fabricating a multi-layer roll of claim 9, wherein the spider assembly includes a male spider (42) adapted to be mounted on the end of the core (28) having a cylindrical portion and a tapered conical portion, the tapered portion including channels extending from the end of the conical portion to the cylindrical position. and a female spider extender (41) including a central opening for feeding elastomeric material to the tapered conical position of the male spider (42) and a tapered opening for receiving the conical portion of the male spider (42) and having an outer cylindrical wall for engaging the membrane with the mold cavity when the mold is closed.

## Patentansprüche

1. Verfahren zum Bilden einer Mehrschichtrolle, die eine Fluorpolymerdeckschicht (31) auf einer elastischen Schicht (29) aufweist, welche mit einem im Wesentlichen starren Kern (28) verbunden wird, umfassend:
Bereitstellen eines im Wesentlichen starren zylindrischen Kerns (28) und Aufbringen einer Schicht aus flexiblem, nicht selbstabstützendem Fluorpolymer (31) um den zylindrischen Kern (28) herum, um die Deckschicht (31) in Blattform oder Hülsenform über der gesamten Länge des Kerns (28) zu bilden, um eine Baueinheit zu bilden;
Anordnen der Baueinheit in einer zylindrischen Formhülse (34), die ein Eintrittsende und ein Austrittsende aufweist, zusammen mit einer Dornhaltergruppe (41, 42) an mindestens dem Eintrittsende des Kerns(28) zum Führen eines fließfähigen elastomeren Materials (29) zwischen der Deckschicht (31) und dem Kern (28), mit den Enden der Deckschicht (31), die sich über die Enden der Formhülse (34) und der Dornhaltergruppe (41, 42) erstreckt;
Anordnen der Formhülse (34) mit dem Kernaufbau in dem Hohlraum (36, 37) der aufklappbaren Form (11) und Schließen der aufklappbaren Form (11), so dass die Deckschicht (31), die sich über die Enden der Formhülse (34) und der Dornhaltergruppe (41, 42) erstreckt, zwischen der Dornhaltergruppe (41, 42) und dem aufklappbaren Formhohlraum (36, 37) eingelegt wird;
Einspritzen des fließfähigen elastomeren Materials (29) zwischen der Deckschicht (31) und dem Kern (28) an einer Stelle abwärts des Einlegens von mindestens des Eintrittsendes der Deckschicht (31);
Erwärmen der aufklappbaren Form (11), um das elastomere Material (29) auszuhärten;
Kühlen des Formeinsatzstücks; und
Entfernen der Mehrschichtrolle aus der Formhülse (34).

2. Verfahren zum Formen einer Mehrschichtrolle nach Anspruch 1, wobei die Deckschicht (31) ein flexibler extrudierter fluorelastomerer Film ist und das Verfahren das Wickeln des Films um den Kern (28) umfasst.

3. Verfahren zum Bilden einer Mehrschichtrolle nach Anspruch 1, wobei die Deckschicht (31) eine flexible, nicht selbstabstützende Hülse ist und das Verfahren das Aufbringen der Hülse um den Kern (28) herum und die Dornhaltergruppe (41, 42) umfasst, welche sich über die Formhülse (34) erstreckt, so dass die flexible Hülse zwischen der Außenseite der Dornhaltergruppe (41, 42) und dem aufklappbaren Formhohlraum eingelegt wird.

4. Verfahren zum Bilden einer Mehrschichtrolle nach Anspruch 1, ferner umfassend den Schritt des Sinterns der Deckschicht (31) durch Anwenden von Wärme und Druck auf die Rolle.

5. Vorrichtung zum Herstellen einer Mehrschichtrolle mit einer Fluorpolymerdeckschicht (31), die aus einer Fluorpolymermembran auf einer elastomeren Basisschicht (29) gebildet wird, die mit einem im Wesentlichen starren zylindrischen Kern (28) verbunden ist, umfassend:
eine aufklappbare Form (11), die einen Bodenabschnitt (14) und einen zusammenwirkenden oberen Abschnitt (13) aufweist zum Bilden eines zylindrischen Hohlraums, der ein Eintrittsende und ein Austrittsende aufweist, wenn die Form geschlossen wird;
eine zylindrische Formhülse (34), die an den Sitz innerhalb des zylindrischen Hohlraums der zusammengebauten Form angepasst wird;
eine Dornhaltergruppe (41, 42) zum Führen des eingespritzten fließfähigen elastomeren Materials in den Rollenaufbau zwischen dem Kern (28) und der Deckschicht (31), die am Eintrittsende der Formhülse (34) positioniert wird;
den Formhohlraum, der einen Bereich zum Einlegen der Deckschicht (31) zwischen dem Dornhaltergruppe (41, 42) und dem Formhohlraum enthält, wenn die Hülse in der Form angeordnet wird;
eine Quelle des elastomeren Materials zum Einspritzen in den Rollenaufbau; und
Mittel zum Erwärmen der Form, um das elastomere Material auszuhärten.

6. Vorrichtung zum Herstellen einer Mehrschichtrolle nach Anspruch 5, wobei die Dornhaltergruppe (41, 42) einen Steckdorn (42), der für die Montage auf dem Ende des Kerns (28) angepasst ist, der einen zylindrischen Abschnitt und einen abgeschrägten konischen Abschnitt aufweist, wobei der abgeschrägte Abschnitt Kanäle enthält, die sich vom Ende des konischen Abschnitts zu dem zylindrischen Abschnitt erstrecken, und einen Aufnahmedorn-Extender (41), der eine Mittenöffnung zum Zuführen des elastomeren Materials zu dem konischen Abschnitt des Steckdorns (42) und eine abgeschrägte Öffnung zum Aufnehmen des konischen Abschnitts des Steckdorns (42) enthält und eine äußere zylindrische Wand aufweist, die die Membran mit der Formhülse an ihrem Platz einlegt, enthält.

7. Vorrichtung zum Herstellen einer Mehrschichtrolle nach Anspruch 5, ferner umfassend Mittel zum Auslaufen (127) des überschüssigen elastomeren Materials am Austritt der Form, welche ein Auslaufelement enthält, das eine Größe größer als der Kanal aufweist, das angepasst ist, um im Kanal verdrängt zu werden, wenn die Form voll ist, um das Auslaufen des Elastomeren zu erlauben, um zusätzliches Elastomer zum Formhohlraum zu verhindern.

8. Vorrichtung zum Durchführen eines Verfahrens nach Anspruch 1 zum Herstellen mehrerer Mehrschichtrollen mit einer Fluorpolymerdeckbeschichtung (31) auf einer elastomeren Basisschicht (29), die mit einem im Wesentlichen starren zylindrischen Kern (28) verbunden wird, umfassend:
mehrere zylindrische Formhülsen (34);
eine aufklappbare Form (11), die einen Bodenabschnitt (14) und zusammenwirkenden oberen Abschnitt (13) aufweist zum Bilden mehrerer zylindrischer Hohlräume zum Aufnehmen der Formhülsen (34), wenn die Form geschlossen wird, wobei jeder Hohlraum angepasst ist, um ein Rolleneinsatzstück aufzunehmen und zu zentrieren, das innerhalb der Hülsen angeordnet wird und sicher die Deckschicht (31) über dem Einsatzstück einlegt und sich über die Enden der Formhülsen (34) erstreckt;
die Form, die mit einem Eintritt (26) zum Einspritzen des elastomeren Materials in den Rollenaufbau gebildet wird;
Mittel, die auf einem Ende der Form montiert sind, zum Einspritzen des fließfähigen elastomeren Materials in den Rollenaufbau zwischen dem inneren zylindrischen Kern (28) und der Deckschicht (31) in einer zylindrischen Formhülse (34), die in dem Hohlraum positioniert wird; und
Mittel zum Erwärmen der Form, um das elastomere Material auszuhärten.

9. Vorrichtung zum Herstellen einer Mehrschichtrolle nach Anspruch 8, wobei die Mittel zum Führen des elastomeren Materials zwischen dem Kern und der Deckschicht eine im Wesentlichen zylindrische Dornhaltergruppe (41, 42) ist, die Kanäle zum Verteilen des elastomeren Materials über den Kern aufweist.

10. Vorrichtung zum Herstellen einer Mehrschichtrolle nach Anspruch 9, wobei die Dornhaltergruppe einen Steckdorn (42), der für die Montage auf dem Ende des Kerns (28) angepasst ist, der einen zylindrischen Abschnitt und einen abgeschrägten konischen Abschnitt aufweist, wobei der abgeschrägte Abschnitt Kanäle enthält, die sich vom Ende des konischen Abschnitts zu dem zylindrischen Abschnitt erstrecken, und einen Aufnahmedorn-Extender (41), der eine Mittenöffnung zum Zuführen des elastomeren Materials zu dem abgeschrägten konischen Abschnitt des Steckdorns (42) und eine abgeschrägte Öffnung zum Aufnehmen des konischen Abschnitts des Steckdorns (42) enthält und eine äußere zylindrische Wand zum Einlegen der Membran mit dem Formhohlraum aufweist, wenn die Form geschlossen wird, enthält.

## Revendications

1. Procédé de fabrication d'un rouleau multicouches comprenant une couche supérieure de polymère fluoré (31) sur une couche élastique (29) liée à un coeur cylindrique sensiblement rigide (28), comprenant les étapes suivantes :
. utilisation d'un coeur sensiblement rigide (28) et dépôt d'une couche de polymère fluoré non-autoporteuse flexible (31) autour du coeur cylindrique (28) pour former ladite couche supérieure (31) sous la forme d'une gaine ou d'une feuille sur toute la longueur du coeur (28) pour former un ensemble ;
. mise en place dudit ensemble dans une gaine cylindrique de moulage (34) présentant une extrémité d'entrée et une extrémité de sortie réunies entre elles par un dispositif en araignée (41, 42), au moins à l'extrémité d'entrée du coeur (28) pour diriger la matière élastomère fluide (29) entre la couche supérieure (31) et le coeur (28), les extrémités de la couche supérieure (31) se prolongeant au-delà des extrémités de la gaine cylindrique de moulage (34) et du dispositif en araignée (41, 42) ;
. mise en place de la gaine cylindrique de moulage (34) avec l'ensemble de coeur dans la cavité (36, 37) d'un moule à charnière latérale (11) et fermeture du moule à charnière latérale (11) de manière à ce que la couche supérieure (31) qui se prolonge au-delà des extrémités de la gaine cylindrique de moulage (34) et du dispositif en araignée (41, 42) soit engagée entre le dispositif en araignée (41, 42) et la cavité (36, 37) d'un moule à charnière latérale ;
. injection de matière élastomère fluide (29) entre la couche supérieure (31) et le coeur (28) en une position située en aval de l'engagement d'au moins l'extrémité d'entrée de la couche supérieure (31) ;
. chauffage du moule à charnière latérale (11) afin de vulcaniser la matière élastomère (29) ;
. refroidissement de l'insert moulé ; et
. retrait du rouleau multicouches de la gaine cylindrique de moulage (34).

2. Procédé de fabrication d'un rouleau multicouches selon la revendication 1, dans lequel la couche supérieure (31) est un film élastomère fluoré extrudé flexible et dans lequel le procédé comprend l'enveloppement du film autour du coeur (28).

3. Procédé de fabrication d'un rouleau multicouche selon la revendication 1, dans lequel la couche supérieure (31) est une feuille non-autoporteuse flexible et dans lequel le procédé comprend le positionnement de la gaine cylindrique de moulage autour du coeur (28) et du dispositif en araignée (41, 42) qui se prolonge au-delà des extrémités de la gaine cylindrique de moulage (34) de manière à ce que la gaine cylindrique de moulage flexible soit engagée entre l'extérieur du dispositif en araignée (41, 42) et la cavité du moule à charnière latérale.

4. Procédé de fabrication d'un rouleau multicouches selon la revendication 1, comprenant en outre l'étape de frittage de la couche supérieure (31) en chauffant et en appliquant une pression sur rouleau.

5. Dispositif pour la fabrication d'un rouleau multicouches avec une couche supérieure de polymère fluoré (31) formée à partir d'une membrane supérieure de polymère fluoré sur un couche de base élastomère (29) liée à un coeur cylindrique sensiblement rigide (28), comprenant les éléments suivants :
. un moule à charnière latérale (11) présentant une partie de fond (14) et une partie supérieure coopérante (13) pour former une cavité cylindrique présentant une extrémité d'entrée et une extrémité de sortie lorsque le moule est fermé ;
. une gaine cylindrique de moulage (34) adaptée pour s'ajuster à l'intérieur de la cavité cylindrique de moule assemblé ;
. un dispositif en araignée (41, 42) pour diriger la matière élastomère fluide (29) injectée dans le rouleau entre le coeur (28) et la couche supérieure (31) positionné sur l'extrémité d'entrée de la gaine cylindrique de moulage (34)
. la cavité du moule comprenant une région pour l'engagement de la couche supérieure (31) entre le dispositif en araignée (41, 42) et la cavité du moule lorsque la gaine cylindrique de moulage est placée dans le moule ;
. une source de matière élastomère pour l'injection dans l'ensemble de rouleau ; et
. un moyen de chauffage du moule pour réticuler la matière élastomère.

6. Dispositif pour la fabrication d'un rouleau multicouches selon la revendication 5, dans lequel le dispositif en araignée (41, 42) comprend un dispositif mâle (42) prévu pour être monté sur l'extrémité du coeur (28) présentant une partie cylindrique et une partie conique effilée, la partie effilée comportant des canaux se prolongeant depuis l'extrémité de la partie conique jusqu'à la partie cylindrique, et un prolongement de dispositif femelle (41) présentant une ouverture centrale pour l'alimentation en matière élastomère vers la partie conique du dispositif mâle (42) et une ouverture inclinée pour recevoir la partie conique du dispositif mâle (42) et présentant une paroi cylindrique externe engageant la membrane avec la gaine cylindrique de moulage en place.

7. Dispositif pour la fabrication d'un rouleau multicouches selon la revendication 5, comprenant en outre un moyen d'évacuation (127) de la matière élastomère en excès à la sortie du moule qui comprend un élément d'évacuation ayant des dimensions supérieures à celles du canal adapté pour être déplacé dans le canal lorsque le moule est plein afin d'évacuer de l'élastomère pour éviter que de l'élastomère supplémentaire soit conduit dans la cavité du moule.

8. Dispositif pour la fabrication d'un rouleau multicouches selon la revendication 1 pour la fabrication de rouleaux multicouches avec une couche supérieure de polymère fluoré (31) sur une couche de base en élastomère (29) liée à un coeur cylindrique sensiblement rigide (28), comprenant les éléments suivants :
. une pluralité de gaines cylindriques de moulage (34) ;
. un moule à charnière latérale (11) présentant une partie de fond (14) et une partie supérieure coopérante (13) pour former une pluralité de cavités cylindriques pour recevoir les gaines cylindriques de moulage (34) lorsque le moule est fermé, chaque cavité étant adaptée pour recevoir et centrer un rouleau-insert logé à l'intérieur des gaines cylindriques de moulage et engager fermement la couche supérieure (31) autour de l'insert et la prolonger au-delà des extrémités des gaines cylindriques de moulage (34) ;
. le moule comprenant une entrée (26) pour injecter la matière élastomère (29) à l'intérieur des ensembles de rouleaux ;
. un moyen monté sur une extrémité du moule pour injecter la matière élastomère fluide à l'intérieur de l'ensemble à rouleau entre le coeur cylindrique interne (28) et la couche supérieure (31) dans une gaine cylindrique de moulage (34) logée dans la cavité ; et
. un moyen de chauffage du moule pour réticuler la matière élastomère.

9. Dispositif pour la fabrication d'un rouleau multicouches selon la revendication 8, dans lequel le moyen pour diriger la matière élastomère entre le coeur et la couche supérieure est un dispositif en araignée sensiblement cylindrique (41, 42) présentant des canaux de distribution de la matière élastomère autour du coeur.

10. Dispositif pour la fabrication d'un rouleau multicouche selon la revendication 9, dans lequel le dispositif en araignée comprend un dispositif d'araignée mâle (42) prévu pour être monté sur l'extrémité du coeur (28) présentant une partie cylindrique et une partie conique effilée, la partie effilée comportant des canaux se prolongeant depuis l'extrémité de la partie conique jusqu'à la partie cylindrique, et un prolongement d'araignée femelle (41) présentant une ouverture centrale pour l'alimentation en matière élastomère vers la partie conique de l'araignée mâle (42) et une ouverture inclinée pour recevoir la partie conique de l'araignée mâle (42) et présentant une paroi cylindrique externe engageant la membrane avec la cavité de moulage lorsque le moule est fermé.
